# EUROPEAN PATENT APPLICATION

(11) **EP 1 119 171 A1**
(43) Date of publication of application: **25.07.2001**
(21) Application number: 00440016.4
(22) Date of filing: 21.01.2000
(51) Int. Cl.: H04M 3/533

(54) **Telecommunication system, as well as switch, as well as preprocessing unit**

(71) Applicant: ALCATEL, 75008 Paris (FR)
(72) Inventor: Sienel, Jürgen, 71229 Leonberg (DE); Knoblich, Ulf, 55765 Birkenfeld (DE); Kopp, Dieter, 75418 Illingen (DE)
(74) Representative: van Bommel, Jan Peter

(57) **Abstract**

Due to, after the introduction of distributed speech recognition, two kinds of terminals being in existence, novel terminals comprising a preprocessing unit for cooperation with a final processing unit, and old fashioned terminals not comprising such a preprocessing unit, switches will have to react differently in dependence of what kind of terminal needs to be switched. This can be avoided by locating said preprocessing unit between said old fashioned terminal and said final processing unit, for example between said old fashioned terminal and said switch or in said switch before the switching is done.

## Description

The invention relates to a telecommunication system comprising a preprocessing unit for preprocessing a speech signal originating from a terminal, which telecommunication system further comprises said terminal, a switch to be coupled to said terminal and a final processing unit coupled to said switch for final processing a preprocessed speech signal.

Such a telecommunication system is known from US 5,809,464 disclosing a distributed voice recognition system having a preprocessor (feature extraction apparatus) located in a terminal and having a final processing unit (text generator) which can be located somewhere else in a mobile network, for example a central communications center or cell base station (switch).

Such a telecommunication system is disadvantageous, inter alia, due to during a transition period, with (novel) terminals of a first kind comprising said preprocessing unit and with (old fashioned) terminals of a second kind not comprising said preprocessing unit, said telecommunication system needing to switch terminals of said first kind to said final processing unit and terminals of said second kind not.

It is an object of the invention, inter alia, to provide a telecommunication system as described in the preamble, which allows the switching of terminals independently of a terminal being of a first kind (novel) and comprising said preprocessing unit or of being of a second kind (old fashioned) and not comprising said preprocessing unit.

Thereto, the telecommunication system according to the invention is characterised in that said preprocessing unit is located between said terminal and said final processing unit.

By, for old fashioned terminals, locating said preprocessing unit between said terminal not comprising any preprocessing unit and between said final processing unit (before said switching takes place), whereby in case of a novel terminal already comprising such a preprocessing unit, this locating of an extra preprocessing unit is not to be done, said switching can be done independently of said terminal being old fashioned or novel.

The invention is based on the insight, inter alia, that functions like preprocessing and final processing can be shifted, as long as their subsequency is not changed.

The invention solves the problem, inter alia, of allowing the switching of terminals independently of a terminal being of a first kind (novel) and comprising said preprocessing unit or of being of a second kind (old fashioned) and not comprising said preprocessing unit.

A first embodiment of the telecommunication system according to the invention is characterised in that said switch comprises said preprocessing unit, which preprocessing unit is to be coupled to said terminal.

By locating said preprocessing unit in said switch for those (old fashioned) terminals which do not comprise themselves such preprocessing units, whereby for (novel) terminals already comprising such preprocessing units said locating is not to be done, said switch is adapted and a user of a terminal does not need to adapt himself anything.

A second embodiment of the telecommunication system according to the invention is characterised in that said preprocessing unit is located between said terminal and said switch, of which preprocessing unit a first part is to be coupled to said terminal and of which preprocessing unit a second part is to be coupled to said switch.

By using said preprocessing unit as a kind of stand-alone unit, said switch does not need to be adapted, which is advantageous to a telecom operator owning said switch, which telecom operator in exchange for example could give each user of an old fashioned terminal a preprocessing unit to be located for example in the user's house between Network Termination or NT and said old fashioned terminal.

A third embodiment of the telecommunication system according to the invention is characterised in that said terminal is a wired terminal system (analog, ADSL, xDSL, ISDN, etc.) or a wireless terminal system (DECT), with said switch being a switch for fixed communication coupled to said terminal system via a fysical connection.

A fourth embodiment of the system according the invention is characterised in that said terminal is a mobile terminal (GSM, CTS, UMTS, GPRS etc.), with said switch being a switch for fixed communication coupled via fysical connections to a mobile switching center (MSC etc.) and a base station (BTS etc.) for mobile communication with said mobile terminal.

The invention further relates to a switch for use in a telecommunication system comprising a preprocessing unit for preprocessing a speech signal originating from a terminal, which telecommunication system further comprises said terminal, said switch to be coupled to said terminal and a final processing unit coupled to said switch for final processing a preprocessed speech signal.

The switch according to the invention is characterised in that said switch comprises said preprocessing unit, which preprocessing unit is to be coupled to said terminal.

A first embodiment of the switch according to the invention is characterised in that said switch further comprises said final processing unit.

A second embodiment of the switch according to the invention is characterised in that said terminal is a wired terminal system or a wireless terminal system, with said switch being a switch for fixed communication coupled to said terminal system via at least one fysical connection.

A third embodiment of the switch according to the invention is characterised in that said terminal is a mobile terminal, with said switch being a switch for fixed communication coupled via at least one fysical connection to a mobile switching center and a base station for mobile communication with said mobile terminal.

The invention yet further relates to a preprocessing unit for use in a telecommunication system comprising said preprocessing unit for preprocessing a speech signal originating from a terminal, which telecommunication system further comprises said terminal, said switch to be coupled to said terminal and a final processing unit coupled to said switch for final processing a preprocessed speech signal.

The preprocessing unit according to the invention is characterised in that said preprocessing unit is a stand-alone unit located between said terminal and said switch, of which preprocessing unit a first part is to be coupled to said terminal and of which preprocessing unit a second part is to be coupled to said switch.

The document US 5,809,464 discloses a distributed voice recognition system. The document US 5,012,518 discloses a low bitrate speech coder. The document US 4,991,217 discloses a dual processor speech recognition system. All references including further references cited in or with respect to said references (like for example US 5, 231,670) are considered to be incorporated.

The invention will be further explained at the hand of an embodiment described with respect to a drawing, whereby

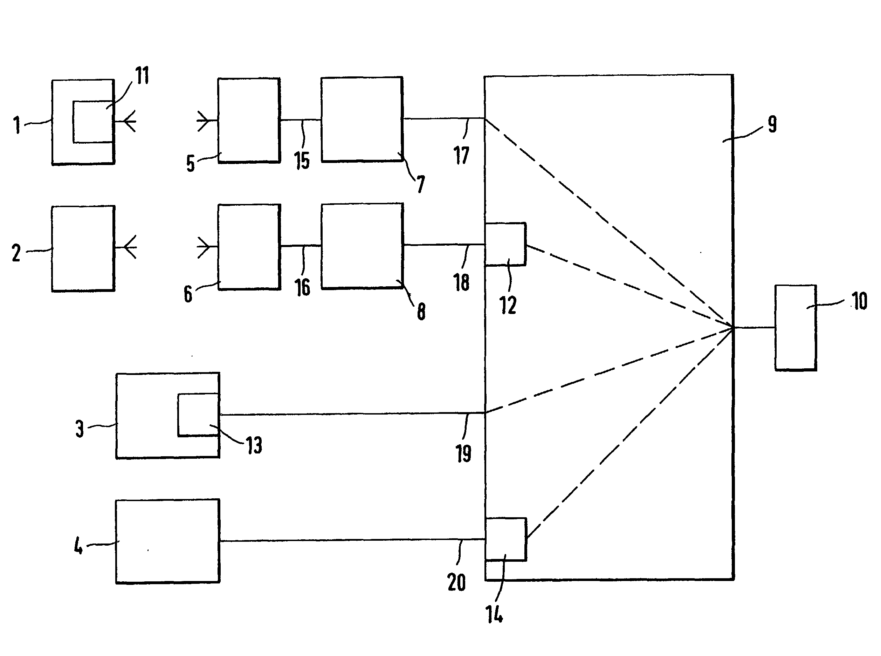

figure 1 discloses a telecommunication system according to the invention comprising a switch 9 according to the invention and comprising a first mobile (novel) terminal 1 of a first kind being provided with a first preprocessing unit 11 and a second mobile (old fashioned) terminal 2 not being provided with a preprocessing unit and a third fixed (novel) terminal 3 being provided with a third preprocessing unit 13 and a fourth fixed (old fashioned) terminal 4 not being provided with a preprocessing unit. Said switch 9 is coupled at a first side with a Mobile Switching Center or MSC 7 via a connection 7 and with a MSC 8 via a connection 18 and with terminal 3 via a connection 19 and with terminal 4 via connection 20. MSC 7 is further coupled via a connection 15 to basestation or BS radio communication with terminal 1, and MSC 8 is further coupled via a connection 16 to BS 6 for radio communication with terminal 2. Said switch 9 is at a second side coupled to a final processing unit server 10, usually being in the form of a server. Switch 9 comprises according to the invention a second preprocessing unit 12 coupled with connection 18, and comprises a fourth preprocessing unit 14 coupled with connection 20.

According to prior art, the telecommunication system shown in figure 1 functions as follows. As for example disclosed in US 5,809, 464 defining a distributed voice recognition system, a mobile novel terminal will be provided with a preprocessing unit like for example a feature extractor, which is located between a microphone and a transmitter coupled to an antennae. Said feature extractor extracts features from input speech provided to said microphone. These features are transmitted (analog, GSM-900, GSM-1800, CTS, UMTS, GPRS, always-on IP-connection using for example GPRS etc.) via a base station and a mobile switching center and a switch for fixed communication to a final processing unit like for example a word decoder, which generates a linguistic estimate of said speech. Of course, said preprocessing unit like for example said feature extractor should be as close to said microphone as possible, and said final processing unit like for example said word decoder should be there where sufficient processor capacity is available. As a consequence, the available bandwidth between preprocessing unit and final processing unit is used most efficiently. A fixed novel terminal system (wired: analog, ADSL, xDSL, ISDN, or wireless: DECT) will also be provided with a preprocessing unit like for example a feature extractor, which is coupled to a microphone. Said feature extractor extracts features from input speech provided to said microphone. These features are transmitted via a fysical connection (analog, ADSL, xDSL, ISDN, always-on IP-connection using for example a higher frequency band of ADSL or xDSL or using for example a D-channel of ISDN etc.) and a switch for fixed communication to a final processing unit like for example a word decoder, which generates a linguistic estimate of said speech, etc.

According to the invention, the telecommunication system shown in figure 1 further comprises a mobile old fashioned terminal 2 not being provided with a preprocessing unit and comprises a fixed old fashioned terminal (system) 4 not being provided with a preprocessing unit. To overcome the problem, inter alia, that for example switch 9 should switch calls with terminal 1 (or 3) via final processing unit 10 on the one hand, and that switch 9 should switch calls with terminal 2 (or 4) not via final processing unit 10, switch 9 has been provided with second preprocessing unit 12 coupled to connection 18 and with fourth preprocessing unit 14 coupled to connection 20. As a result, either in a terminal or in a switch before the switching takes place or between said terminal and said switch, preprocessing is done for each terminal, and said switch no longer needs to treat certain calls differently from other calls, which is a great advantage.

According to a first alternative, said second preprocessing unit 12 could be located in BS 6, between BS 6 and MSC 8, in MSC 8 or between MSC 8 and switch 9.

According to a second alternative, said fourth preprocessing unit 14 could be located between terminal 4 and switch 9, possibly in the form of a stand-alone unit.

According to a third alternative, said second preprocessing unit 12 and said fourth preprocessing unit 14 are combined into a fifth preprocessing unit taking care of all old fashioned terminals (mobile and wired and wireless), and/or connections 18 and 20 are mutually coupled.

According to a fourth alternative, said final processing unit 10 forms part of and is located in switch 9.

According to a fifth alternative, one or more extra switches are placed between on the one hand switch 9 and on the other hand final processing unit 10 and/or MSC 7 and/or MSC 8 and/or terminal 3 and/or terminal 4.

All embodiments are just embodiments and do not exclude other embodiments not shown and/or described. All alternatives are just alternatives and do not exclude other alternatives not shown and/or described. Any embodiment and any alternative can be combined with any other one.

## Claims

1. Telecommunication system, comprising a preprocessing unit for preprocessing a speech signal originating from a terminal, which telecommunication system further comprises said terminal, a switch to be coupled to said terminal and a final processing unit coupled to said switch for final processing a preprocessed speech signal, characterised in that said preprocessing unit is located between said terminal and said final processing unit.

2. Telecommunication system according to claim 1, characterised in that said switch comprises said preprocessing unit, which preprocessing unit is to be coupled to said terminal.

3. Telecommunication system according to claim 1, characterised in that said preprocessing unit is located between said terminal and said switch, of which preprocessing unit a first part is to be coupled to said terminal and of which preprocessing unit a second part is to be coupled to said switch.

4. Telecommunication system according to claim 1, 2 or 3, characterised in that said terminal is a wired terminal system or a wireless terminal system, with said switch being a switch for fixed communication coupled to said terminal system via a fysical connection.

5. Telecommunication system according to claim 1, 2 or 3, characterised in that said terminal is a mobile terminal, with said switch being a switch for fixed communication coupled via fysical connections to a mobile switching center and a base station for mobile communication with said mobile terminal.

6. Switch for use in a telecommunication system comprising a preprocessing unit for preprocessing a speech signal originating from a terminal, which telecommunication system further comprises said terminal, said switch to be coupled to said terminal and a final processing unit coupled to said switch for final processing a preprocessed speech signal, characterised in that said switch comprises said preprocessing unit, which preprocessing unit is to be coupled to said terminal.

7. Switch according to claim 6, characterised in that said switch further comprises said final processing unit.

8. Switch according to claim 6 or 7, characterised in that said terminal is a wired terminal system or a wireless terminal system, with said switch being a switch for fixed communication coupled to said terminal system via at least one fysical connection.

9. Switch according to claim 6 or 7, characterised in that said terminal is a mobile terminal, with said switch being a switch for fixed communication coupled via at least one fysical connection to a mobile switching center and a base station for mobile communication with said mobile terminal.

10. Preprocessing unit for use in a telecommunication system comprising said preprocessing unit for preprocessing a speech signal originating from a terminal, which telecommunication system further comprises said terminal, said switch to be coupled to said terminal and a final processing unit coupled to said switch for final processing a preprocessed speech signal, characterised in that said preprocessing unit is a stand-alone unit located between said terminal and said switch, of which preprocessing unit a first part is to be coupled to said terminal and of which preprocessing unit a second part is to be coupled to said switch.
